# EUROPÄISCHE PATENTSCHRIFT

(11) **EP 1 279 473 B1**
(45) Veröffentlichungstag und Bekanntmachung des Hinweises auf die Patenterteilung: **17.03.2004**
(21) Anmeldenummer: 02002593.8
(22) Anmeldetag: 05.02.2002
(51) Int. Cl.: B29C 33/30, B29C 31/00, B29C 33/00

(54) **Vorrichtung zur Herstellung von Verbundwerkstücken**
Apparatus for making composite articles
Dispositif pour la production des éléments en matériau composite

(30) Priorität: 23.07.2001 DE 10134942
(43) Veröffentlichungstag der Anmeldung: 29.01.2003
(73) Patentinhaber: FRIMO Group GmbH & Co. KG, 49504 Lotte (DE)
(72) Erfinder: Denker, Ernst, 49492 Westerkappeln (DE); Schwarze, Bernd, Dr., 49569 Bramsche (DE)
(74) Vertreter: Moldenhauer, Herbert

(56) Entgegenhaltungen:
- EP-A- 0 278 921
- EP-A- 1 201 393
- DE-A- 4 433 455
- DE-U- 9 107 173
- US-A- 5 362 221
- US-A- 5 415 540
- PATENT ABSTRACTS OF JAPAN vol. 012, no. 282 (M-726), 3. August 1988 (1988-08-03) -& JP 63 059511 A (MITSUBISHI ELECTRIC CORP), 15. März 1988 (1988-03-15)

## Beschreibung

Die Erfindung betrifft eine Vorrichtung zur Herstellung von Verbundwerkstücken, umfassend ein in einem Gestell auf einem ersten Werkzeugträger festlegbares Formunterteil und zumindest zwei alternierend damit verbindbare Formoberteile, die mittels einer Hubeinrichtung bewegbar sind, wobei die Formoberteile in einer ersten Arbeitsebene alternierend mit einem zweiten Werkzeugträger oder dem Formunterteil verklinkbar und mittels des zweiten Werkzeugträgers in eine über der ersten Arbeitsebene angeordnete zweite Arbeitsebene überführbar und in der zweiten Arbeitsebene gegeneinander austauschbar sind.

### Stand der Technik

Eine solche Vorrichtung ist aus der DE 44 33 455 C2 bekannt. Die Vorrichtung ist zum Herstellen von hinterschäumten Lederteilen ausgebildet, insbesondere von Lederverkleidungsteilen für eine Fahrzeuginnenausstattung. Das Formunterteil und eines der Formoberteile sind zum Vorformen des Leders ausgebildet. Das andere Formoberteil und dasselbe Formunterteil sind Hinterschäumwerkzeuge zum Hinterschäumen des vorgeformten Lederteils. Das Formunterteil bildet also eine gemeinsame Formhälfte, mit der alternativ eines der Formoberteile in Eingriff bringbar ist. Die Formoberteile sind durch Verschwenken um jeweils eine von zwei möglichen orthogonal zueinander liegenden Schwenkachsen mit dem gemeinsamen Formunterteil zu einem geschlossenen Werkzeug zusammenbringbar. Die erste Schwenkachse wird durch an einem Formoberteil sowie dem Formunterteil befestigte Scharniere gebildet, während die die zweite Schwenkachse bildenden Scharniere an einer Schamierleiste des zweiten Werkzeugträgers befestigt sind.

Eine Vorrichtung zur Herstellung eines Formteils aus vorexpandierten Schaumstoffpartikeln zeigt das Gebrauchsmuster DE-U-A-9107 173. Dort ist ein Werkzeugteil ortsfest angeordnet während das andere Werkzeugteil an einer verfahrbaren Tragplatte befestigt ist. Das die Einlage des Formteils aufnehmende Werkzeugteil ist über eine schnell lösbare Verbindung mit der Tragplatte gekuppelt und mit Führungen versehen, die ein Austauschen des Werkzeugteils gegen ein gleiches Werkzeugteil ermöglichen.

In der nicht vorveröffentlichten EP-A-1 201 393 ist eine Vorrichtung zur Herstellung von Verbundwerkstücken dargestellt, die ein in einem Gestell auf einem ersten Werkzeugträger festlegbares Formoberteil und zumindest zwei alternierend damit verbindbare Formoberteile hat, die mittels einer Hubeinrichtung bewegbar sind. Die Formoberteile sind in einer ersten Arbeitsebene alternierend mit einem zweiten Werkzeugträger oder dem Formunterteil verklinkbar und mittels des zweiten Werkzeugträgers in eine über der ersten Arbeitsebene angeordnete zweite Arbeitsebene überführbar und in der zweiten Arbeitsebene gegeneinander austauschbar.

### Darstellung der Erfindung

Der Erfindung liegt die Aufgabe zugrunde, dass Stillstandzeiten der Vorrichtung für die Bestückung der Werkzeuge oder deren Wechsel verringert werden, dass die Werkzeuge, unabhängig von ihrer Position relativ zu zumindest einem der Werkzeugträger, stets betätigbar sind, dass Unfallgefahren reduziert werden und dass durch die Vorrichtung die Arbeitsbedingungen für das Bedienpersonal verbessert werden, wobei die Werkzeuge einfach und permanent mit Energie versorgbar sind.

Diese Aufgabe wird erfindungsgemäß mit den Merkmalen von Anspruch 1 gelöst. Auf vorteilhafte Ausgestaltungen nehmen die Unteransprüche Bezug.

Zur Lösung dieser Aufgabe ist es vorgesehen, dass der erste und/oder der zweite Werkzeugträger jeweils ein Werkzeugmagazin mit zumindest einem Werkzeug mit Energiezuführung umfasst, dass das Werkzeug zur Bearbeitung des Verbundwerkstücks in einer horizontalen Ebene zum ersten und/oder zweiten Werkzeugträger schwenkbar ist und dass die Energiezuführung als Schleppleitung ausgebildet ist. Bei einer solchen Ausgestaltung ist von Vorteil, dass der Austausch der alternierend verwendbaren Formoberteile in der über der ersten Arbeitsebene angeordneten zweiten Arbeitsebene erfolgt, wobei die zweite Arbeitsebene so hoch über der ersten Arbeitsebene angeordnet ist, dass sich Bedienpersonal in diesem Bereich bevorzugt nicht aufhält. Die jeweilige Verbindung der Formoberteile mit dem zweiten Werkzeugträger ist bevorzugt automatisiert, wobei das Bedienpersonal von der ersten Arbeitsebene aus bedarfsweise in die Arbeitsabläufe in der zweiten Arbeitsebene eingreifen kann. Dadurch, dass die Bewegung zumindest der Formoberteile und der Austausch der Formoberteile gegeneinander in der zweiten Arbeitsebene stattfindet, in der sich kein Bedienpersonal aufhält, ist die Arbeitssicherheit gegenüber Vorrichtungen, bei denen ein entsprechender Wechsel von Formoberteilen in der ersten Arbeitsebene stattfindet, wesentlich verbessert. Außerdem ist bei einem Austausch der Formoberteile in der zweiten Arbeitsebene von Vorteil, dass während der Zeit, in der das erste Formoberteil mit dem Formunterteil verbunden ist, das zweite Formoberteil für den nächsten Arbeitszyklus vorbereitet werden kann. Dadurch ist von Vorteil, dass die verfahrensbedingt benötigten Stillstandzeiten zur Bestückung der Formoberteile auf ein Minimum reduziert sind. Durch das spezifische Werkzeugmagazin wird sichergestellt, dass die Werkzeuge, die horizontal in Richtung der Hubeinrichtung einschwenkbar sind, mittels der Schleppleitung einfach und permanent mit Energie versorgbar sind, beispielsweise durch elektrische Energie, pneumatische Energie oder hydraulische Energie. Die Schleppleitungen haben den Vorteil, dass sie im Bereich ihrer Anschlüsse keine Relativbewegungen zu benachbarten Maschinenelementen ausführen, sondern relativ ortsfest an diesen Maschinenelementen befestigt sind. Die Relativbewegung des Werkzeugs, bezogen auf das Verbundwerkstück, wird durch die flexibel ausgebildete Schleppleitung ausgeglichen, was im Hinblick auf eine zuverlässige Funktion der Vorrichtung während einer langen Gebrauchsdauer von hervorzuhebendem Vorteil ist.

### Zur Funktion der erfindungsgemäßen Vorrichtung wird folgendes ausgeführt:

Je nachdem, wie die Formoberteile und das Formunterteil ausgebildet sind, besteht die Möglichkeit, dass die beiden Formoberteile zum zweistufigen Hinterschäumen von Bezugsstoffen ausgebildet sind oder beispielsweise zum Vorformen eines Bezugsstoffs und seiner anschließenden Hinterschäumung.

Das Formunterteil ist in einem Gestell angeordnet, wobei das Gestell mit dem ersten Werkzeugträger verbunden ist. Der erste Werkzeugträger mit dem Formunterteil befindet sich während der Durchführung des Arbeitsverfahrens in der ersten, unteren Arbeitsebene, beispielsweise auf dem Hallenboden einer Produktionshalle. Die Formoberteile sind demgegenüber alternierend mit dem zweiten Werkzeugträger in Eingriff bringbar, wobei die Formoberteile durch die Hubeinrichtung von der ersten Arbeitsebene in die zweite, darüber liegende Arbeitsebene, die sich beispielsweise in der ersten Etage einer Produktionshalle befindet, bewegbar sind. Um eines der Formoberteile mit dem Formunterteil zu verklinken, wird das für den anschließenden Verfahrensschritt erforderliche Formoberteil mit dem zweiten Werkzeugträger verbunden und mit dem mit dem ersten Werkzeugträger in Eingriff befindlichen Formunterteil verklinkt. Im Anschluß an den Verfahrensschritt wird das erste Formoberteil vom Formunterteil getrennt, durch die Hubeinrichtung in die zweite Arbeitsebene bewegt und dort vom zweiten Werkzeugträger getrennt. Das während des ersten Verfahrensschritts bereits vorbereitete zweite Formoberteil wird anschließend mit dem zweiten Werkzeugträger verbunden und durch die Hubeinrichtung von der zweiten Arbeitsebene in die erste Arbeitsebene abgesenkt und dort mit dem Formunterteil verklinkt. Nach Durchführung des zweiten Verfahrensschritts und der Trennung des zweiten Formoberteils vom Formunterteil kann das gebrauchsfertige Bauteil, beispielsweise ein hinterschäumter Bezugsstoff, aus dem Formunterteil oder dem zweiten Formoberteil ausgeworfen oder entnommen werden.

Das Werkzeugmagazin kann zumindest zwei Werkzeuge umfassen, die alternierend schwenkbar sind.

Der erste Werkzeugträger kann als um eine erste horizontale Achse verschwenkbarer erster Tisch ausgebildet sein; der zweite Werkzeugträger kann als um eine weitere horizontale Achse in eine Rückenlage schwenkbarer zweiter Tisch ausgebildet sein. Durch die um jeweils eine horizontale Achse schwenkbaren Werkzeugträger, die in Form von schwenkbaren Tischen ausgebildet sind, ist von Vorteil, dass die Handhabung der Vorrichtung dadurch wesentlich vereinfacht ist. Der erste Werkzeugträger, der mit dem Formunterteil verbunden ist, sowie der zweite Werkzeugträger, der mit einem der Formoberteile verbunden ist, können derart geschwenkt werden, dass die jeweilige Kavität der Formteile offen vor dem Bedienpersonal liegt und bequem von oben bestückbar ist. Daraus resultiert eine wesentliche Verbesserung der Arbeitsbedingungen gegenüber Formteilen, die beispielsweise über Kopf bestückt werden müssen und/oder deren Werkzeugkavität vom Bedienpersonal nur schlecht, möglicherweise gar nicht einsehbar ist.

Mittels der Hubeinrichtung kann zusätzlich der erste Werkzeugträger in die zweite Arbeitsebene überführbar sein und in der zweiten Arbeitsebene mit einem abweichend gestalteten weiteren Formunterteil verbindbar sein. Hierbei ist von Vorteil, dass bei zumindest zweistufigen Verfahren, bei denen jedes Formunterteil an einem Verfahrensschritt beteiligt ist, das jeweils passende Formunterteil in die Vorrichtung eingebracht wird. Auch besteht durch eine derartige Ausgestaltung die Möglichkeit, dass verschiedene Endprodukte herstellbar sind. Beispielsweise besteht die Möglichkeit, mit nur einer Vorrichtung unterschiedlich gestaltete, hinterschäumte Bezugsstoffe herstellen zu können, wobei in der Vorrichtung die jeweils erforderlichen Formteile miteinander kombiniert werden.

Im zweiten Werkzeugträger kann in der zweiten Arbeitsebene zumindest ein Magazin für die zweiten und/oder ersten Formoberteile zugeordnet sein. In einem Magazin befinden sich bevorzugt Formteile, die übereinstimmend ausgebildet sind. Sollen demgegenüber in einer Vorrichtung unterschiedliche Bauteile hergestellt werden, ist von Vorteil, dass dem ersten und/oder zweiten Werkzeugträger in der zweiten Arbeitsebene jeweils so viele Magazine zugeordnet sind, wie unterschiedliche Bauteile hergestellt werden sollen. Sollen beispielsweise zwei Ausführungsformen hinterschäumter Bezugsstoffe hergestellt werden, sind jeweils zwei unterschiedliche Magazine für die Formunterteile und die Formoberteile von Vorteil. Die Bestückung der jeweiligen Werkzeugträger erfolgt dann aus dem Magazin, das die Formteile für das jeweilige Produkt enthält.

Der erste und/oder der zweite Werkzeugträger und/oder das Formunterteil und/oder die Formoberteile können motorisch betriebene Einrichtungen für das gegenseitige Verklinken aufweisen. Die motorisch betriebenen Einrichtungen können beispielsweise pneumatisch und/oder hydraulisch und/oder durch einen Elektromotor antreibbar sein. Im Hinblick auf eine einfache Konstruktion und eine kostengünstige Herstellbarkeit der erfindungsgemäßen Vorrichtung gelangen bevorzugt pneumatische und/oder hydraulische Einrichtungen zur Anwendung. Druckluft steht in den meisten Betrieben kostengünstig zur Verfügung.

Der erste und/oder der zweite Werkzeugträger und das Gestell können durch flexible Versorgungsleitungen für die Einrichtungen verbunden sein. Die Einrichtungen können Ansaug-, Keil- und/oder Drehverschlüsse umfassen. Aus Sicherheitsgründen wird Einrichtungen der Vorzug gegeben, die eine formschlüssige Verbindung der miteinander zu verbindenden Formteile bewirken. Die flexiblen Versorgungsleitungen haben den Vorteil, dass Lageänderungen verschiedener Bauteile zueinander problemlos möglich sind, da sich die Versorgungsleitungen den veränderten Positionen der Bauteile zueinander selbsttätig anpassen. Die Versorgungsleitungen sind keinen nachteiligen Spannungen ausgesetzt. Eine Beschädigung der Versorgungsleitungen und/oder ein Abreißen der Anschlüsse ist nicht zu befürchten.

Jedes Formoberteil kann zur Zuführung eines Vorlegers zu dem Formunterteil ausgebildet sein. Ein Formoberteil wird beispielsweise in der zweiten Arbeitsebene bestückt, wobei ein in das Formoberteil eingelegter Rohling durch eine Ansaugvorrichtung und Vakuum in seiner Position gehalten wird. Das Formoberteil wird dann auf das Formunterteil in der ersten Arbeitsebene bewegt und mit diesem verklinkt, wobei der im ersten Verfahrensschritt bearbeitete Rohling anschließend, beispielsweise ebenfalls durch ein Vakuum im Formunterteil gehalten wird, während das erste Formoberteil in die zweite Arbeitsebene bewegt, durch das zweite Formoberteil ersetzt und anschließend wieder auf das Formunterteil bewegt und damit verklinkt wird.

Das Formunterteil und die Formoberteile sind bevorzugt zur Herstellung hinterschäumter Bezugsstoffe ausgebildet. Speziell für diesen Anwendungsfall hat sich eine Vorrichtung mit zwei Arbeitsebenen bewährt.

Ein Ausführungsbeispiel der erfindungsgemäßen Vorrichtung wird nachfolgend anhand der Figuren näher erläutert.

Diese zeigen jeweils in schematischer Darstellung:

### Kurzbeschreibung der Zeichnungen

- Fig. 1: ein Ausführungsbeispiel der Vorrichtung in perspektivischer Darstellung,
- Fig. 2: den ersten Werkzeugträger als Einzelteil,
- Fig. 3: den zweiten Werkzeugträger als Einzelteil,
- Fig. 4: eine beispielhafte Einrichtung zum Verklinken der Formteile,
- Fig. 5: einen Schnitt durch einen hinterschäumten Bezugsstoff,
- Fig. 6: ein Ausführungsbeispiel eines Werkzeugmagazins in einer Draufsicht und in schematischer Darstellung.

### Ausführung der Erfindung

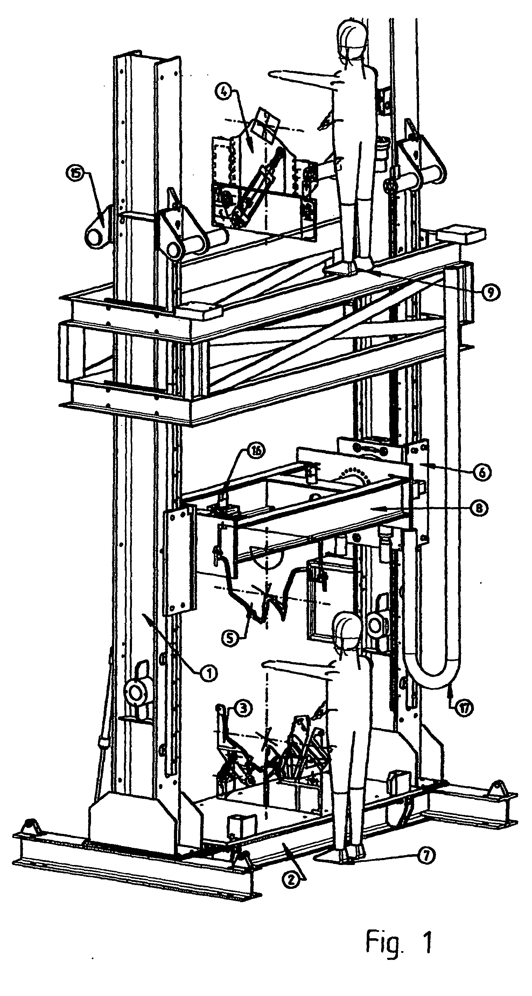

In Fig. 1 ist ein Ausführungsbeispiel der erfindungsgemäßen Vorrichtung in perspektivischer Darstellung gezeigt. Die Vorrichtung ist zur Herstellung hinterschäumter Bezugsstoffe 22 geeignet, wie sie beispielsweise als Innenraumverkleidung für Kraftfahrzeuge zur Anwendung gelangen. Die Verbundwerkstücke bestehen dabei aus dem Bezugsstoff 22, der beispielsweise aus Stoff oder Leder bestehen kann. Auf der der sichtbaren Oberfläche abgewandten Seite ist der Bezugsstoff 22 mit einem Schaumstoff 23 hinterschäumt.

Die Vorrichtung umfasst ein Gestell 1, in dem das Formunterteil 3 angeordnet ist, wobei das Gestell 1 zusammen mit dem Formunterteil 3 am ersten Werkzeugträger 2 befestigt ist.

In dem hier gezeigten Ausführungsbeispiel befindet sich der erste Werkzeugträger 2 in der ersten Arbeitsebene 7, die durch den Boden einer Produktionshalle gebildet ist. Der Boden des ersten Stocks der Produktionshalle bildet die zweite Arbeitsebene 9, in der jeweils ein Magazin 15 für zwei Formoberteile 4, 5 angeordnet ist.

Die Hubeinrichtung 6 kann zumindest den zweiten Werkzeugträger 8 von der ersten Arbeitsebene 7 in die zweite Arbeitsebene 9 heben. In der zweiten Arbeitsebene 9 wird das erste Formoberteil 4 aus dem zweiten Werkzeugträger 8 entnommen und durch das zweite Formoberteil 5 ersetzt. Anschließend, nachdem das zweite Formoberteil 5 mit dem zweiten Werkzeugträger 8 verbunden ist, wird dieser von der Hubeinrichtung 6 von der zweiten Arbeitsebene 9 in die erste Arbeitsebene 7 abgesenkt, wobei das im zweiten Werkzeugträger 8 befindliche zweite Formoberteil 5 mit dem Formunterteil 3, das im ersten Werkzeugträger 2 angeordnet ist, verklinkbar ist.

Die Vorrichtung kann beispielsweise derart ausgeführt sein, dass der erste Werkzeugträger 2 zusätzlich zu dem zweiten Werkzeugträger 8 durch die Hubeinrichtung 6 ebenfalls von der ersten Arbeitsebene 7 in die zweite Arbeitsebene 9 und wieder zurück bewegbar ist. In der zweiten Arbeitsebene 9 kann in diesem Fall ein weiteres Magazin für Formoberteile 4, 5 angeordnet sein, die bedarfsweise, ebenso wie die Formunterteile 3 austauschbar sind.

Zum gegenseitigen Verklinken des Formoberteils 4, 5 mit dem zweiten Werkzeugträger 8 ist die Einrichtung 16 vorgesehen, die die beiden Formoberteile beispielsweise durch Keil- 19 und/oder Drehverschlüsse miteinander verbindet. Die Einrichtungen 16 sind in diesem Ausführungsbeispiel pneumatisch betätigbar und durch flexible Pneumatik-Versorgungsleitungen 17 mit einem hier nicht dargestellten Druckerzeuger verbunden. Die flexiblen Versorgungsleitungen 17 vermögen den Bewegungen der Werkzeugträger 2, 8 zu folgen.

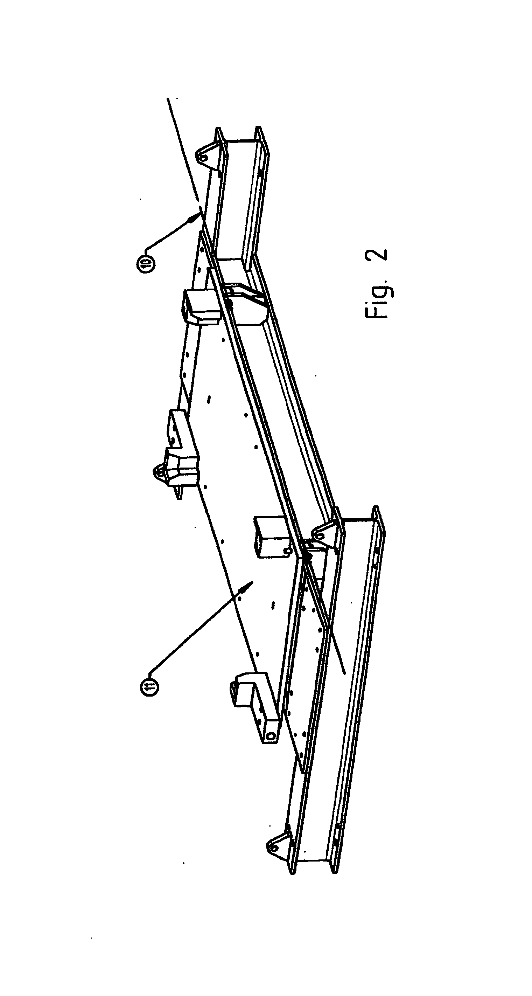

In Fig. 2 ist ein Ausführungsbeispiel eines ersten Werkzeugträgers 2 gezeigt. Der erste Werkzeugträger 2 ist um die erste horizontale Achse 10 schwenkbar und bildet dadurch einen ersten Tisch 11, wobei die Kavität innerhalb des Tischs bedarfsweise mit Halbzeugen, beispielsweise einem zu hinterschäumenden Bezugsstoff, bestückbar ist.

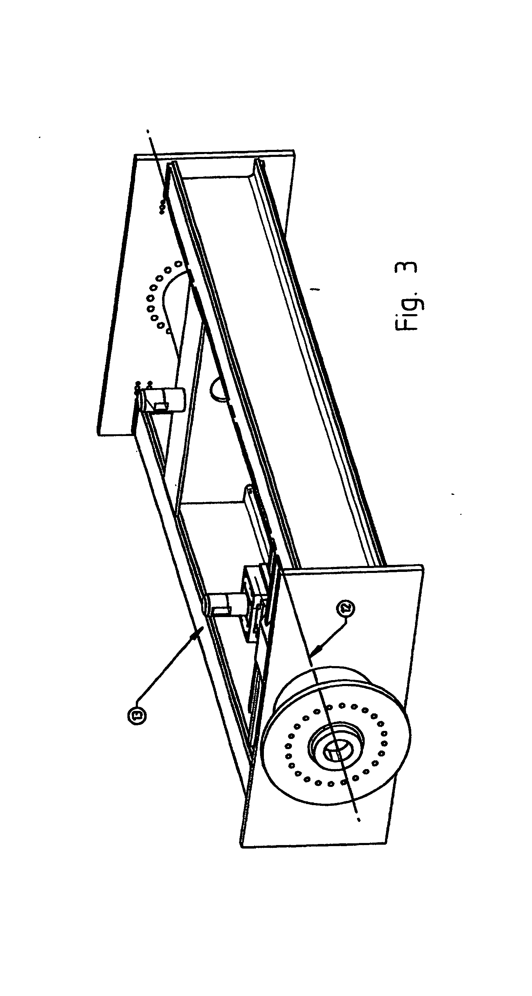

Um eine einfache und gute Handhabung der Vorrichtung zu gewährleisten und die Arbeitsbedingungen für das Bedienpersonal zu verbessern, bei gleichzeitiger Reduzierung der Unfallgefahren, ist der zweite Werkzeugträger 8, wie in Fig. 3 dargestellt, um die zweite horizontale Achse 12 in eine Rückenlage verschwenkbar und bildet den zweiten Tisch 13. Unabhängig davon, welche Arbeiten am ersten und/oder zweiten Werkzeugträger durch das Bedienpersonal auszuführen sind, können die Werkzeugträger um ihre jeweiligen Achsen 10, 12 beliebig geschwenkt werden, so dass sich für das Bedienpersonal gute Arbeitsbedingungen ergeben.

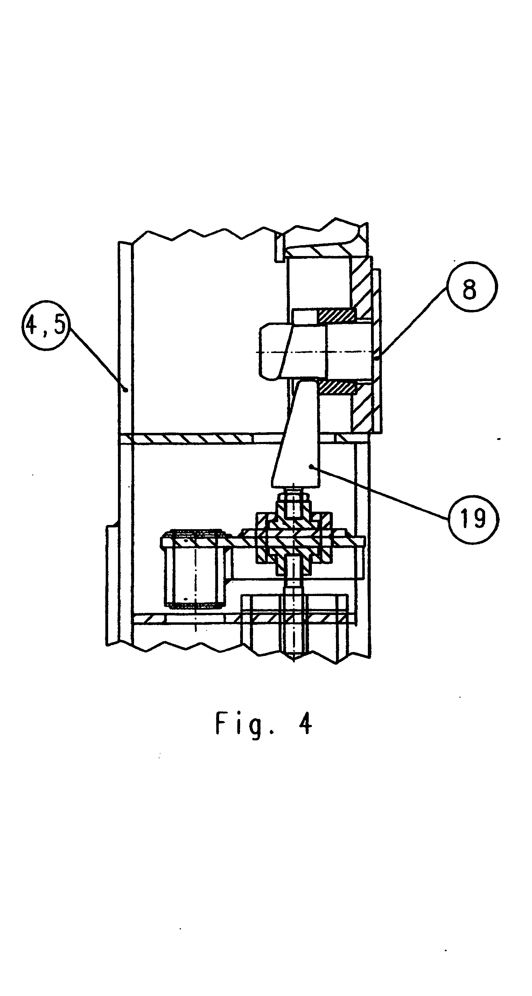

In Fig. 4 ist ein Ausführungsbeispiel einer Einrichtung 16 zum Verklinken des Formunterteils 3 mit einem der Formoberteile 4, 5 gezeigt. Die Einrichtung 16 ist in diesem Ausführungsbeispiel als Keil-19 und Drehverschluss ausgebildet, um eine sichere und exakte Positionierung der Formteile 3 und 4 oder 5 zueinander zu gewährleisten.

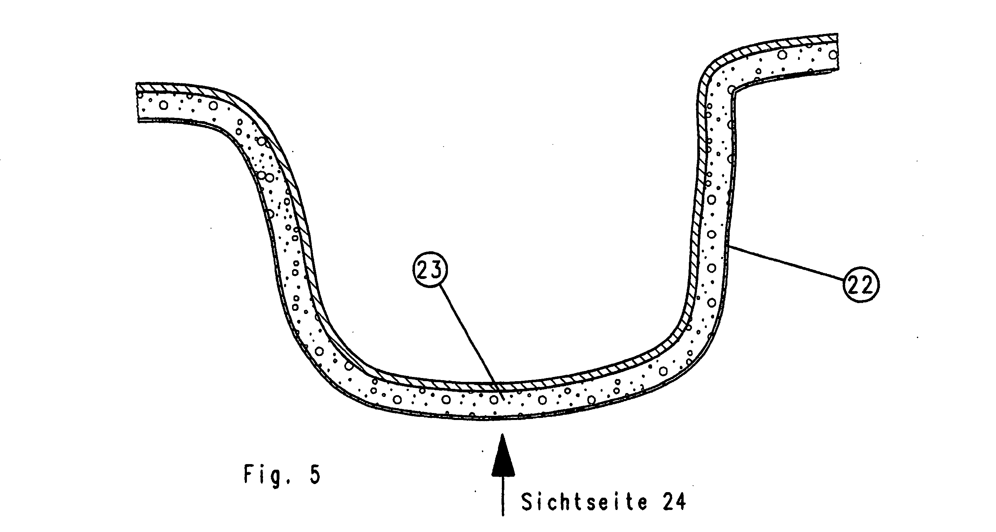

In Fig. 5 ist ein Ausführungsbeispiel eines hinterschäumten Bezugsstoffs 22 gezeigt. Der Bezugsstoff 22 selbst ist in diesem Ausführungsbeispiel durch ein Kunstleder für die Innenraumverkleidung eines Kraftfahrzeugs gebildet. Der Bezugsstoff 22 ist auf der der Sichtseite 24 abgewandten Seite mit dem Schaumstoff 23 hinterschäumt.

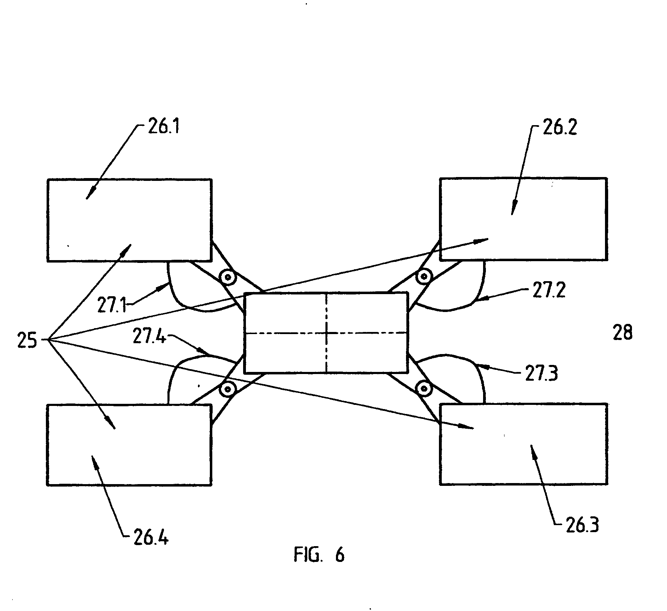

In Fig. 6 ist ein Ausführungsbeispiel eines Werkzeugmagazins 25 in einer Draufsicht und in schematischer Darstellung gezeigt. In diesem Ausführungsbeispiel ist das Werkzeugmagazin 25 am ersten Werkzeugträger 2 festgelegt und umfasst vier Werkzeuge 26.1, 26.2, 26.3, 26.4 mit jeweils einer Energiezuführung 27.1, 27.2, 27.3, 27.4. Alle vier Werkzeuge 26.1, 26.2, 26.3, 26.4 sind zur Bearbeitung des Verbundwerkstücks in der horizontalen Ebene 28 in Richtung des ersten Werkzeugträgers 2 schwenkbar, wobei jede der Energiezuführungen 27.1, 27.2, 27.3, 27.4 zu den jeweiligen Werkzeugen 26.1, 26.2, 26.3, 26.4 als Schleppleitung ausgebildet ist. Die Schleppleitungen sind jeweils schlauchförmig und flexibel, so dass sie Lageveränderungen der Werkzeuge 26.1, 26.2, 26.3, 26.4 relativ zum Werkzeugmagazin 25 spannungsfrei folgen können.

## Patentansprüche

1. Vorrichtung zur Herstellung von Verbundwerkstücken, umfassend ein in einem Gestell (1) auf einem ersten Werkzeugträger (2) festlegbares Formunterteil (3) und zumindest zwei alternierend damit verbindbare Formoberteile (4, 5), die mittels einer Hubeinrichtung (6) bewegbar sind, wobei die Formoberteile (4, 5) in einer ersten Arbeitsebene (7) alternierend mit einem zweiten Werkzeugträger (8) oder dem Formunterteil (3) verklinkbar und mittels des zweiten Werkzeugträgers (8) in eine über der ersten Arbeitsebene (7) angeordnete zweite Arbeitsebene (9) überführbar und in der zweiten Arbeitsebene (9) gegeneinander austauschbar sind, **dadurch gekennzeichnet, dass** der erste (2) und/oder der zweite Werkzeugträger (8) jeweils ein Werkzeugmagazin (25) mit zumindest einem Werkzeug (26) mit Energiezuführung (27) umfasst, dass das Werkzeug (26) zur Bearbeitung des Verbundwerkstücks in einer horizontalen Ebene (28) zum ersten (2) und/oder zweiten Werkzeugträger (8) schwenkbar ist und dass die Energiezuführung (27) als Schleppleitung ausgebildet ist.

2. Vorrichtung nach Anspruch 1, **dadurch gekennzeichnet, dass** das Werkzeugmagazin (25) zumindest zwei Werkzeuge (26.1, 26.2, 26.3, 26.4) umfasst, die alternierend schwenkbar sind.

3. Vorrichtung nach einem der Ansprüche 1 oder 2, **dadurch gekennzeichnet, dass** der erste Werkzeugträger (2) als um eine erste horizontale Achse (10) schwenkbarer erster Tisch (11) ausgebildet ist.

4. Vorrichtung nach einem der Ansprüche 1 oder 2, **dadurch gekennzeichnet, dass** der zweite Werkzeugträger (8) als um eine zweite horizontale Achse (12) in eine Rückenlage schwenkbarer zweiter Tisch (13) ausgebildet ist.

5. Vorrichtung nach einem der Ansprüche 1 bis 4, **dadurch gekennzeichnet, dass** mittels der Hubeinrichtung (6) des zweiten Werkzeugträgers (8) zusätzlich der erste Werkzeugträger (2) in die zweite Arbeitsebene (9) überführbar und in der zweiten Arbeitsebene (9) mit einem abweichend gestalteten weiteren Formunterteil verbindbar ist.

6. Vorrichtung nach einem der Ansprüche 1 bis 5, **dadurch gekennzeichnet, dass** dem zweiten Werkzeugträger (8) in der zweiten Arbeitsebene (9) zumindest ein Magazin (15) für die zweiten (5) oder die ersten Formoberteile (4) zugeordnet sind.

7. Vorrichtung nach einem der Ansprüche 1 bis 6, **dadurch gekennzeichnet, dass** der erste (2) und/oder der zweite Werkzeugträger (8) und/oder das Formunterteil (3) und/oder die Formoberteile (4, 5) motorisch betriebene Einrichtungen (16) für das gegenseitige Verklinken aufweisen.

8. Vorrichtung nach einem der Ansprüche 1 bis 7, **dadurch gekennzeichnet, dass** der erste (2) und/oder der zweite Werkzeugträger (8) und das Gestell (1) durch flexible Versorgungsleitungen (17) für die Einrichtungen (16) verbunden sind.

9. Vorrichtung nach einem der Ansprüche 1 bis 8, **dadurch gekennzeichnet, dass** die Einrichtungen (16) Ansaug-, Keil- und/oder Drehverschlüsse umfassen.

10. Vorrichtung nach einem der Ansprüche 1 bis 9, **dadurch gekennzeichnet, dass** jedes Formoberteil (4, 5) zur Zuführung eines Vorlegers zu dem Formunterteil (3) ausgebildet ist.

11. Vorrichtung nach einem der Ansprüche 1 bis 9, **dadurch gekennzeichnet, dass** das Formunterteil (3) und die Formoberteile (4, 5) zur Herstellung hinterschäumter Bezugsstoffe ausgebildet sind.

## Claims

1. An apparatus for producing composite workpieces, comprising a bottom mould part (3) which can be fixed in a frame (1) on a first tool carrier (2) and at least two top mould parts (4, 5) which can be alternately connected to the said bottom mould part (3) and can be moved by means of a lifting device (6), in which apparatus the top mould parts (4, 5) can be alternately interlocked with a second tool carrier (8) or the bottom mould part (3) in a first working plane (7) and can be transferred by means of the second tool carrier (8) into a second working plane (9) arranged above the first working plane (7) and can be interchanged in the second working plane (9), **characterized in that** the first tool carrier (2) and/or the second tool carrier (8) in each case comprises a tool magazine (25) having at least one tool (26) with a power feed (27), **in that** the tool (26), for processing the composite workpiece, is pivotable in a horizontal plane (28) relative to the first tool carrier (2) and/or the second tool carrier (8), and **in that** the power feed (27) is designed as a trailing line.

2. An apparatus according to claim 1, **characterized in that** the tool magazine (25) comprises at least two tools (26.1, 26.2, 26.3, 26.4) which are pivotable alternately.

3. An apparatus according to either of claims 1 and 2, **characterized in that** the first tool carrier (2) is designed as a first table (11) pivotable about a first horizontal axis (10).

4. An apparatus according to either of claims 1 and 2, **characterized in that** the second tool carrier (8) is designed as a second table (13) pivotable about a second horizontal axis (12).

5. An apparatus according to any one of claims 1 to 4, **characterized in that**, by means of the lifting device (6) of the second tool carrier (8), the first tool carrier (2) can be additionally transferred into the second working plane (9) and can be connected in the second working plane (9) to a further bottom mould part of different design.

6. An apparatus according to any one of claims 1 to 5, **characterized in that** at least one magazine (15) for the second top mould parts (5) or the first top mould parts (4) is assigned to the second tool carrier (8) in the second working plane (9).

7. An apparatus according to any one of claims 1 to 6, **characterized in that** the first tool carrier (2) and/or the second tool carrier (8) and/or the bottom mould part (3) and/or the top mould parts (4, 5) have motor-operated devices (16) for the mutual interlocking.

8. An apparatus according to any one of claims 1 to 7, **characterized in that** the first tool carrier (2) and/or the second tool carrier (8) and the frame (1) are connected by flexible supply lines (17) for the devices (16).

9. An apparatus according to any one of claims 1 to 8, **characterized in that** the devices (16) comprise suction, wedge and/or rotary locks.

10. An apparatus according to any one of claims 1 to 9, **characterized in that** each top mould part (4, 5) is designed for supplying a mat to the bottom mould part (3).

11. An apparatus according to any one of claims 1 to 9, **characterized in that** the bottom mould part (3) and the top mould parts (4, 5) are designed for producing back-foamed cover materials.

## Revendications

1. Dispositif pour la production de pièces en matériau composite, comprenant une partie inférieure de moule (3) pouvant être fixée sur un premier porte-outil (2) dans un châssis (1) et au moins deux parties supérieures de moule (4, 5) pouvant s'y raccorder en alternance, qui peuvent être déplacées au moyen d'un dispositif de levage (6), les parties supérieures de moule (4, 5) dans un premier plan de travail (7) pouvant être encliquetées en alternance avec un deuxième porte-outil (8) ou avec la partie inférieure de moule (3) et pouvant être transférées au moyen du deuxième porte-outil (8) dans un deuxième plan de travail (9) disposé au-dessus du premier plan de travail (7) et pouvant être échangées l'une contre l'autre dans le deuxième plan de travail (9), **caractérisé en ce que** le premier (2) et/ou le deuxième porte-outil (8) comprend respectivement un magasin d'outils (25) avec au moins un outil (26), avec une alimentation en énergie (27), **en ce que** l'outil (26) pour façonner la pièce en matériau composite peut être pivoté dans un plan horizontal (28) vers le premier (2) et/ou le deuxième porte-outil (8) et **en ce que** l'alimentation en énergie (27) est formée en tant que conduite accompagnante.

2. Dispositif selon la revendication 1, **caractérisé en ce que** le magasin d'outils (25) comprend au moins deux outils (26.1, 26.2, 26.3, 26.4) qui peuvent pivoter en alternance.

3. Dispositif selon l'une quelconque des revendications 1 ou 2, **caractérisé en ce que** le premier porte-outils (2) est formé en tant que première table (11) pouvant pivoter autour d'un premier axe horizontal (10).

4. Dispositif selon l'une quelconque des revendications 1 ou 2, **caractérisé en ce que** le deuxième porte-outils (8) est formé en tant que deuxième table (13) pouvant pivoter autour d'un deuxième axe horizontal (12) dans une position arrière.

5. Dispositif selon l'une quelconque des revendications 1 à 4, **caractérisé en ce que** le premier porte-outils (2) peut être en outre transféré dans le deuxième plan de travail (9) au moyen du dispositif de levage (6) du deuxième porte-outils (8) et peut être raccordé à une partie inférieure de moule supplémentaire formée de manière différente dans le deuxième plan de travail (9).

6. Dispositif selon l'une quelconque des revendications 1 à 5, **caractérisé en ce qu'**au moins un magasin (15) pour les deuxième (5) ou première parties supérieures de moule (4) est associé au deuxième porte-outils (8) dans le deuxième plan de travail (9).

7. Dispositif selon l'une quelconque des revendications 1 à 6, **caractérisé en ce que** le premier (2) et/ou le deuxième porte-outils (8) et/ou la partie inférieure de moule (3) et/ou les parties supérieures de moule (4, 5) présentent des dispositifs à entraînement par moteur (16) pour l'encliquetage mutuel.

8. Dispositif selon l'une quelconque des revendications 1 à 7, **caractérisé en ce que** le premier (2) et/ou le deuxième porte-outils (8) et le châssis (1) sont raccordés par des conduites souples d'alimentation (17) pour les mécanismes (16).

9. Dispositif selon l'une quelconque des revendications 1 à 8, **caractérisé en ce que** les dispositifs (16) comprennent des fermetures d'aspiration, fermetures à clavette et/ou verrous tournants.

10. Dispositif selon l'une quelconque des revendications 1 à 9, **caractérisé en ce que** chaque partie supérieure de moule (4, 5) est formée pour introduire une matrice support dans la partie inférieure de moule (3).

11. Dispositif selon l'une quelconque des revendications 1 à 9, **caractérisé en ce que** la partie inférieure de moule (3) et les parties supérieures de moule (4, 5) sont formées afin de produire des matières de revêtement recouvertes de matière expansée au dos.
